# EUROPÄISCHE PATENTSCHRIFT

(11) **EP 0 626 294 B1**
(45) Veröffentlichungstag und Bekanntmachung des Hinweises auf die Patenterteilung: **04.12.1996**
(21) Anmeldenummer: 94105603.8
(22) Anmeldetag: 12.04.1994
(51) Int. Cl.: B60R 9/045

(54) **Dachlastenträger für Fahrzeuge**
Roof carrier for vehicles
Galerie porte-bagages de toit pour véhicules automobiles

(30) Priorität: 28.04.1993 DE 4313885
(43) Veröffentlichungstag der Anmeldung: 30.11.1994
(73) Patentinhaber: Happich Fahrzeug-Dachsysteme GmbH, D-42285 Wuppertal (DE)
(72) Erfinder: Kolodziej, Klaus, D-42327 Wuppertal (DE); Lumpe, Karl-Heinz, D-42279 Wuppertal (DE)

(56) Entgegenhaltungen:
- US-A- 4 501 385
- US-A- 4 982 886
- US-A- 4 988 026
- US-A- 5 190 198

## Beschreibung

Die Erfindung bezieht sich auf einen Dachlastenträger für Fahrzeuge mit zwei ortsfest auf der Dachfläche befestigten Dachleisten, die zumindest annähernd parallel zueinander entlang der Seitenränder der Dachfläche verlaufen, jeweils eine obere Stützfläche und einen langgestreckten, zur Außenseite der Leiste offenen inneren Kanal aufweisen, wobei die Kanalöffnung durch einwärts angeordnete Flansche in einer Eingriffswand der Dachleisten gebildet ist, mit einem vorderen und einem hinteren einstellbar an den Dachleisten montierten Querstab, der jeweils verschiebbar an der Stützfläche der Dachleisten über Stützfüße angebracht ist, und mit Befestigungsvorrichtungen, um die Stützfüße an den Dachleisten zu befestigen, die jeweils eine innerhalb des Kanals angeordnete Klemmplatte und eine Zylinderschraube einschließen, deren sich durch die Kanalöffnung erstreckender Gewindeschaft mit der Klemmplatte im Gewindeeingriff steht.

Bei einem durch die US-A-4 501 385 bekanntgewordenen Dachlastenträger der gattungsgemäßen Art ist eine kraftschlüssige Verbindung zwischen den Dachleisten und den Querstäben vorgesehen, die jeweils über Zylinderschrauben und Klemmplatten hergestellt wird. Erfährt das Fahrzeug eine starke Beschleunigung oder Verzögerung, was beispielsweise durch die Kollision mit einem anderen Fahrzeug oder einem Hindernis oder aber auch durch eine Vollbremsung eintreten kann, wirken am Dachlastenträger und an dem auf ihm befestigten Transportgut aufgrund der Massenträgheit hohe Kräfte. Die Klemmbefestigung hält dieser Beanspruchung nicht immer Stand. Vielmehr kann der Dachlastenträger im Extremfall vom Fahrzeugdach gerissen werden, wobei zunächst die Querträger nebst Transportgut in Längsrichtung der Dachleisten verrutschen.

Bei einem anderen, durch die US-A 4 982 886 bekanntgewordenen Dachlastenträger ist vorgesehen, daß in einer Dachleiste sich mit Abstand in Reihe hintereinander erstreckende Löcher ausgebildet sind und jeder Stützfuß einen in jeweils eines der Löcher eingreifenden, unter der Wirkung einer Druckfeder stehenden Bolzen trägt. Bei diesem bekannten Dachlastenträger wird der jeweilige Stützfuß nicht mittels Klemmplatte und Schraube an der Dachleiste festgelegt.

Der vorliegenden Erfindung liegt nun die Aufgabe zugrunde, bei einem Dachlastenträger der eingangs genannten Art Vorsorge dafür zu treffen, daß die Gefahr des Verrutschens der Querträger längs der Dachleisten bei starker Beschleunigung oder Verzögerung vermieden wird.

Diese Aufgabe wird erfindungsgemäß dadurch gelöst, daß parallel zum Kanal sich mit Abstand in Reihe hintereinander erstreckende Löcher in den Dachleisten ausgebildet sind und daß jeder Stützfuß einen sich achsparallel zum Gewindeschaft erstreckenden, in jeweils eines der Löcher einsetzbaren Sicherungsstift trägt, wobei weiterhin vorgesehen ist, daß der Sicherungsstift jeweils einendig an einer auf dem Stützfuß aufliegenden Platte angeordnet ist und mit seinem freien Ende den engeren Teil einer im Stützfuß ausgebildeten Stufenbohrung durchsetzt, daß die Platte vom Kopf der mit der Klemmplatte in Gewindeeingriff stehenden Zylinderschraube vom Stützfuß gehalten ist, daß die Platte gegen die Kraft einer den Sicherungsstift umschließenden, sich einendig gegen die Ringfläche der Stufenbohrung abstützenden Schraubendruckfeder gegen den Stützfuß bewegbar ist und daß die Zylinderschraube eine ein Herausziehen aus dein Stützfuß sichernde Anschlagscheibe trägt.

Durch diese erfindungsgemäßen Maßnahmen bleibt die Verstellbarkeit der Querträger längs der Dachleisten erhalten, insbesondere aber wird erreicht, daß die Querträger gegen ein Verschieben in Längsrichtung der Dachleisten durch eine formschlüssige Verbindung gesichert sind, auch nach Minderung der Vorspannung beim Setzen des Materials oder beim zu niedrigen Spannen der Klemmplatten.

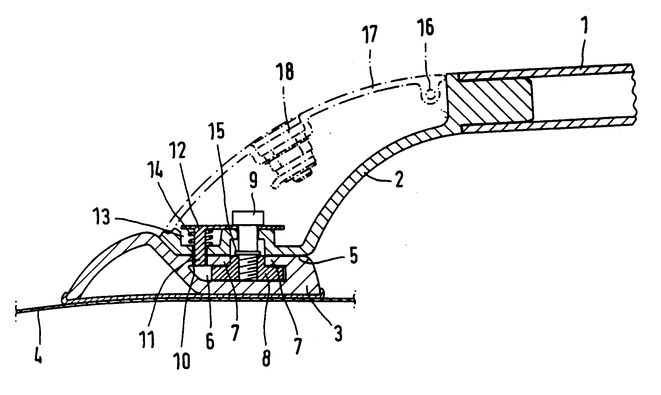

Ein Ausführungsbeispiel der Erfindung wird nachfolgend anhand der Zeichnung näher erläutert.

Die Zeichnung zeigt einen Endbereich eines Querstabs 1, der über einen Stützfuß 2 an einer Dachleiste 3 befestigt ist. Die Dachleiste 3 ist ihrerseits auf der Dachfläche eines Fahrzeugdachs 4 in nicht näher dargestellter Weise befestigt. Zum Dachlastenträger gehören zwei ortsfest auf der Dachfläche befestigte Dachleisten 3, die zumindest annähernd parallel zueinander entlang der Seitenränder des Fahrzeugdachs 4 verlaufen und zwei einstellbar an den Dachleisten 3 montierte Querstäbe 1. Sowohl von den Dachleisten 3 als auch von den Querstäben 1 ist der Einfachheit halber jeweils nur einer dargestellt, was auch für die, die Querstäbe 1 jeweils mit den Dachleisten 3 verbindenden Stützfüße 2 gilt.

Die Dachleiste 3 weist eine obere Stützfläche 5 und einen langgestreckten, zur Außenseite der Leiste 3 offenen inneren Kanal 6 auf, wobei die Kanalöffnung durch einwärts angeordnete Flansche 7 in einer Eingriffswand der Dachleiste 3 gebildet ist. Der Stützfuß 2 sitzt auf der Stützfläche 5 der Dachleiste 3 auf und ist hier mit einer Befestigungsvorrichtung befestigt. Die Befestigungsvorrichtung besteht aus einer innerhalb des Kanals 6 angeordneten Klemmplatte 8 und aus einer Zylinderschraube 9, deren sich durch die Kanalöffnung erstreckender Gewindeschaft mit der Klemmplatte 8 im Gewindeeingriff steht.

Parallel zum Kanal 6 sind mit Abstand zueinander und Reihe hintereinander Löcher 10, von denen in der Zeichnung nur eins gezeigt ist, in der Dachleiste 3 ausgebildet. Ein am Stützfuß 2 angeordneter Sicherungsstift 11 greift in ein Loch 10 ein und legt damit den Fuß 2 bei angezogener Klemmplatte 8 verschiebesicher an der Dachleiste 3 fest.

Der Sicherungsstift 11 kann unmittelbar am Stützfuß 2 oder auch, wie dargestellt, an einer Platte 12 angeordnet sein und mit seinem freien in ein Loch 10 eingreifenden Ende den engeren Teil einer im Stützfuß 2 ausgebildeten Stufenbohrung 13 durchsetzen. Die Platte 12, die vom Kopf der mit der Klemmplatte 8 im Gewindeeinsatz stehenden Zylinderschrauben 9 am Stützfuß 2 gehalten ist, ist gegen die Kraft einer den Sicherungsstift 11 umschließenden, sich einendig gegen die Ringfläche der Stufenbohrung 13 abstützenden Schraubendruckfeder 14 gegen den Stützfuß 2 bewegbar.

Bei der Montage wird mittels der Zylinderschraube 9 der Stützfuß 2 auf der Dachleiste 3 befestigt. Über die Spannplatte 8 entsteht eine kraftschlüssige Verbindung. Mit der Zylinderschraube 9 wird gleichzeitig die Platte 12 gegen die Druckfeder 14 gedrückt. Der Sicherungsstift 11 taucht dadurch in eines der Löcher 10 der Dachleiste 3 ein und sichert somit den Querstab 1 gegen ein Verschieben in Längsrichtung. Beim Lösen der Zylinderschraube 9 wird über die Druckfeder 14 die Platte 12 mit dem Sicherungsstift 11 nach oben bewegt, so daß ein Verschieben des Querstabes 1 möglich wird. Auf der Zylinderschraube 9 sitzt eine Anschlagscheibe 15, die verhindert, daß die Druckfeder 14 die Platte 12 aus der dafür vorgesehenen Aufnahme im Stützfuß 2 drückt.

Die Zeichnung zeigt mit strichpunktierten Linien einen um den Drehpunkt 16 schwenkbaren Deckel 17 mit Schloß 18. Deckel und Schloß bilden eine sinnvolle Diebstahlsicherung.

## Patentansprüche

1. Dachlastenträger für Fahrzeuge mit zwei ortsfest auf der Dachfläche befestigten Dachleisten (3), die zumindest annähernd parallel zueinander entlang der Seitenränder der Dachfläche verlaufen, jeweils eine obere Stützfläche (5) und einen langgestreckten, zur Außenseite der Leiste (3) offenen inneren Kanal (6) aufweisen, wobei die Kanalöffnung durch einwärts angeordnete Flansche (7) in einer Eingriffswand der Dachleisten (3) gebildet ist mit einem vorderen und einem hinteren einstellbar an den Dachleisten (3) montierten Querstab (1), der jeweils verschiebbar an der Stützfläche (5) der Dachleisten (3) über Stützfüße (2) angebracht ist, und mit Befestigungsvorrichtungen, um die Stützfüße (2) an den Dachleisten (3) zu befestigen, die jeweils eine innerhalb des Kanals (6) angeordnete Klemmplatte (8) und eine Zylinderschraube (9) einschließen, deren sich durch die Kanalöffnung erstreckender Gewindeschaft mit der Klemmplatte (8) im Gewindeeingriff steht, dadurch gekennzeichnet, daß parallel zum Kanal (6) sich mit Abstand in Reihe hintereinander erstreckende Löcher (10) in den Dachleisten (3) ausgebildet sind und daß jeder Stützfuß (2) einen sich achsparallel zum Gewindeschaft erstreckenden, in jeweils eines der Löcher (10) einsetzbaren Sicherungsstift (11) trägt, wobei weiterhin vorgesehen ist, daß der Sicherungsstift (11) jeweils einendig an einer auf dem Stützfuß (2) aufliegenden Platte (12) angeordnet ist und mit seinem freien Ende den engeren Teil einer im Stützfuß (2) ausgebildeten Stufenbohrung (13) durchsetzt, daß die Platte (12) vom Kopf der mit der Klemmplatte (8) in Gewindeeingriff stehenden Zylinderschraube (9) am Stützfuß (2) gehalten ist, daß die Platte (12) gegen die Kraft einer den Sicherungsstift (11) umschließenden, sich einendig gegen die Ringfläche der Stufenbohrung (13) abstützenden Schraubendruckfeder (124) gegen den Stützfuß (2) bewegbar ist und daß die Zylinderschraube (9) eine ein Herausziehen aus dem Stützfuß (2) sichernde Anschlagscheibe (15) trägt.

## Claims

1. A roof rack for vehicles with two stationary roof Strips (3), which are at least approximately parallel to each other and are fixed along the lateral edges of the roof surface, each strip being provided with an upper supporting surface (5) and an elongated internal passage (6), which opens towards the exterior of the strip (3), the opening of the passage being formed by internally directed flanges (7) in an insertion wall of the roof strips (3), with a front and rear adjustable transverse bar (1), which is mounted on the roof strips (3), and which is movable on the supporting surface (5) of the roof Strips (3) by means of support feet (2), and with fixing means for fixing the support feet (2) on the strips (3), each fixing means including a clamping plate (8) disposed inside the passage (6) and a cylindrical headed screw (9), whose threaded stem which extends through the passage opening is in threaded engagement with the clamping plate (8), **characterized in that** in the strips (3) are formed a plurality of successive holes (10) which are lined up in parallel with respect to the passage (6) at a certain distance from each other and in that each support foot (2) supports a locking pin (11) whose axis is parallel to the axis of the threaded stem and which is insertable in a respective one of the holes (10), wherein moreover the locking pin (11) is disposed on one end on a plate (12) which lies on the support foot (2), and the pin passes with its free end through the narrow section of a stepped hole (13), which is formed in the support foot (2), in that the plate (12) is fixed on the support foot (2) by means of the head of the cylindrical screw (9) which is in engagement with the clamping plate (8), the plate (12) being movable towards the support foot (2) against the force of a spiral pressure spring (14) which is supported on one end on the annular face of the stepped hole (13) and surrounds the locking pin (11) and the cylindrical head screw (9) supporting an abutment disc (15) which prevents an extraction from the support foot (2).

## Revendications

1. Porte-bagages à fixer sur le toit d'un véhicule, couramment appelé galerie, comportant deux profilés (3) bloqués de manière fixe à la surface du toit, lesquels s'étendent sensiblement parallèles l'un à l'autre le long des bordures latérales de la surface du toit et présentent respectivement une surface supérieure d'appui (5) et un canal intérieur (6), de forme allongée et ouvert vers le côté extérieur du profilé (3), l'ouverture du canal étant formée dans une paroi d'engagement des profilés (3) par l'intermédiaire de brides (7) disposées vers l'intérieur, une tige transversale (1) avant et une tige transversale arrière étant prévues et montées de manière réglable sur les profilés (3), ces tiges, par de petits pieds supports (2) étant respectivement appliquées à la surface d'appui (5) des profilés (3) avec possibilité de déplacement, des dispositifs de fixation pour fixer les petits pieds supports (2) aux profilés (3) étant également prévus, ces dispositifs comprenant respectivement une plaque de serrage (8) disposée dans le canal (6) et une vis a tête cylindrique (9), dont la queue filetée, s'étendant à travers l'ouverture du canal, se trouve engagée, par son filetage, dans la plaque de serrage (8), caractérisé en ce que dans les profilés (3) sont ménagés des trous (10) qui s'étendent a la file, parallèlement au canal (6), et espacés les uns des autres, et que chaque petit pied support (2) porte une cheville de sûreté (11) laquelle s'étend avec son axe parallèle a la queue filetée et est insérable respectivement dans l'un des trous (10), étant également prévu que la cheville de sûreté (11) soit disposée par l'une de ses extrémités sur une plaque (12) prenant appui sur le petit pied support (2) et respectivement traverse par son extrémité libre la partie la plus étroite d'un trou en gradin (13) ménagé dans le petit pied support (2), en ce que la plaque (12) est retenue sur le petit pied support (2) par la tête de la vis à tête cylindrique (9) se trouvant engagée par son filetage dans la plaque de serrage (8), en ce que la plaque (12) est mobile vers le petit pied support (2) et contre la force d'un ressort hélicoïdal de compression (14) qui entoure la cheville de sûreté (11) et est supporté à l'une de ses extrémités par la surface annulaire du trou en gradin (13), et en ce que la vis à tête cylindrique (9) porte un disque de butée (15) lui empêchant d'être extraite du petit pied support (2).
